# EUROPEAN PATENT APPLICATION

(11) **EP 1 959 604 A1**
(43) Date of publication of application: **20.08.2008**
(21) Application number: 06828219.3
(22) Date of filing: 01.12.2006
(51) Int. Cl.: H04L 1/08

(54) **A DATA RETRANSMISSION METHOD, DEVICE AND SYSTEM**

(30) Priority: 02.12.2005 CN 200510126635
(71) Applicant: Huawei Technologies Co., Ltd., Longgang District Shenzhen 518129 (CN)
(72) Inventor: QIN, Yali, Shenzhen, Guangdong 518129 (CN); LI, Rongqiang, Shenzhen, Guangdong 518129 (CN)
(74) Representative: Casalonga, Axel
(86) International application number: PCT/CN2006/003249
(87) International publication number: WO 2007/062599

(57) **Abstract**

The present invention discloses a data retransmission method, including the following steps: a transmitting side records a segmentation identification to a segment block while the transmitting side performs a segmentation processing for data cell according to a physical layer transmission format, the segmentation identification can identify a segment block effectually among all segment blocks stored in the transmitting side; said transmitting side extracts a corresponding segment block from stored segment blocks based on the segmentation identification and retransmits it while the transmitting side determines that a receiving side doesn't receive the segment block correctly. Meanwhile the present invention also provides a data transmission device and data transmission system.

## Description

### FIELD OF THE INVENTION

The invention relates generally to the field of computer and communication, and more particularly, to a method, device and system for data retransmission.

### BACKGROUND

The technical specifications for WCDMA systems have experienced the phases of Release 99, Release 4, Release 5, and Release 6. The standardization of Release 7 has currently begun. Meanwhile, the research on Long Term Evolution (LTE) is also becoming the new hot point of standardization gradually.

In a Release 99 system, dedicated channels are used for uplinks and downlinks, in which the maximum data rate is up to 384 kbps. In the phase of Release 4, the Mobile Service Switch Center (MSC) started to be split into an MSC Server and a Multi-media Gate Way (MGW), in order to separate controls and services. In the phase of Release 5, a concept of IP Multi-media Subsystem (IMS) was introduced in, which adopts High Speed Downlink Packet Access (HSDPA) over the wireless access technique based on the IP transmission layer, making the downlink data rate as high as 14.4 Mbps. In the phase of Release 6, a High Speed Uplink Packet Access (HSUPA) technique was introduced in, making the uplink data rate as high as 5.76 Mbps. The standards mentioned above have become relatively stable. The purpose of Release 7 protocol discussed currently is to improve the system performance by means of small amendments based on Release 6. The LTE will be completely new in terms of the system framework and the physical layer, in order to provide higher data rates and better services to users. The UMTS Terrestrial Radio Access (UTRA) in the LTE is called E-UTRA.

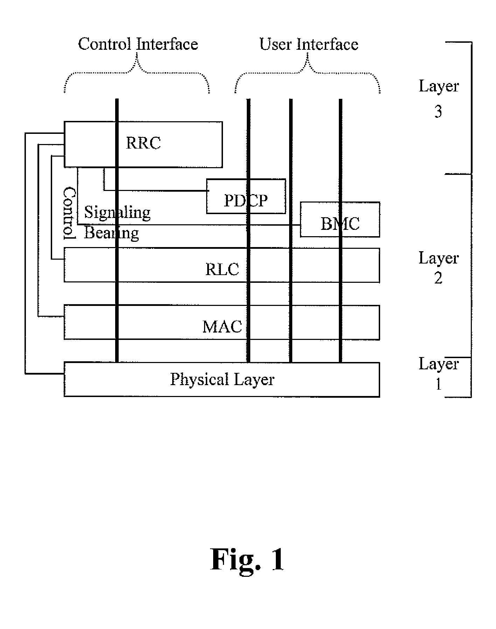

The structure of the wireless interface protocol before Release 7 has three layers. As illustrated in figure 1, Layer 3 is the Radio Resource Control layer; Layer 2 is divided into a Packet Data Convergence Protocol (PDCP) layer, a Broadcast/Multi-broadcast Control (BMC) layer, a Radio Link Control (RLC) layer and a Media Access Control (MAC) layer; and Layer 1 is the physical layer. Packet Service Data in the uplink and downlink are transmitted in the following sequence: PDCP/BMC layer -> RLC layer -> MAC layer -> Physical layer -> the Physical layer at the other side-> the MAC layer at the other side -> the RLC layer at the other side -> the PDCP/BMC layer at the other side, while the signaling goes from the RRC layer directly to the RLC layer at the other side. In the process of data transfer from an upper layer to a lower layer, every time the data passes a layer a data header associated with the layer is added to the data. Having reached the peer layer at the other side, the corresponding data header is removed, and the data content is transferred to the next upper layer. In the process of data transmission, the data from upper layers are segmented/concatenated by the RLC layer and the physical layer, wherein the data from upper layers (RLC SDU) are segmented by the RLC layer into data blocks of equal sizes, header information is added into the data blocks after segmentation, and RLC PDU are formed to be transferred to the MAC layer. In the physical layer, the data from the MAC layer are segmented / concatenated into physical frames of sizes appropriate to be transmitted. The receiving side performs the inverse process of segmentation/concatenation. In the RLC layer, after all the data forming an SDU are correctly received, the RLC SDU is transferred to upper layers.

In a WCDMA system, data received with any error should be retransmitted by the transmitter. Service data with any transmission error will be retransmitted up to three times, including from upper layers to lower layers: retransmission by the server, retransmission by the RLC layer, and retransmission by the physical layer. The upper the protocol layer the retransmission occurs in, the longer the time is needed for the retransmission, and the greater the service delay is, thus the worse the user experiences. What retransmitted in the physical layer are the physical frames with transmission errors, and that in the RLC layer are RLC PDUs with transmission errors, and that by the server are TCP packets.

For the RLC layer, there are three service modes: Transparent Mode, Non-acknowledgement Mode, and Acknowledgement Mode. Only the service in the Acknowledgement Mode may be retransmitted by the RLC layer, data transmitted in the other modes are not retransmitted by the RLC layer even they are in error.

In Release 5 and Release 6, MAC-hs and MAC-e entities are introduced into the MAC layer, transmission format may be selected according to the characteristics of the physical channel and scheduling information, so that the transmission rate and the packet size may be adjusted dynamically, in order that the data are transmitted with efficiency as high as possible.

When a physical frame is retransmitted by the physical layer, the data format for the previous transmission is continued to be used, in other words, the physical frame transmitted previously is directly retransmitted. When an RLC PDU is retransmitted, the retransmitted is the RLC PDU, but it is a new packet to the physical layer, so the physical layer reselects a transmission format for it, regardless of the transmission format of the PDU transmitted with last time. The TCP packet retransmitted by the server is also a completely new packet for the physical layer. The MAC layer selects the transmission format according to the characteristics and scheduling information of the physical channel.

In the existing protocols, data are all required to be segmented /concatenated when an RLC PDU and MAC-hs/MAC-e PDU is formed.

In the RLC layer, an RLC SDU is segmented according to the RLC PDU size configured by upper layers, uniformly numbers the PDU obtained in the segmentation, with the numbers to function as identifications for receiving and retransmission. In the current protocol, the numbers of the RLC PDU are called Sequence Numbers, the length of the Sequence Numbers for the Acknowledgement Mode is 12 bits, and the length for the Non-acknowledgement Mode is 7 bits.

In the current protocol, the size of the RLC PDU is defined when the corresponding RLC entity is configured for a service. When the RLC SDU is segmented, padding bits are appended to a data block if the size of the data block after segmentation is smaller than the size of PDU, in order to ensure that the size of PDU is constant.

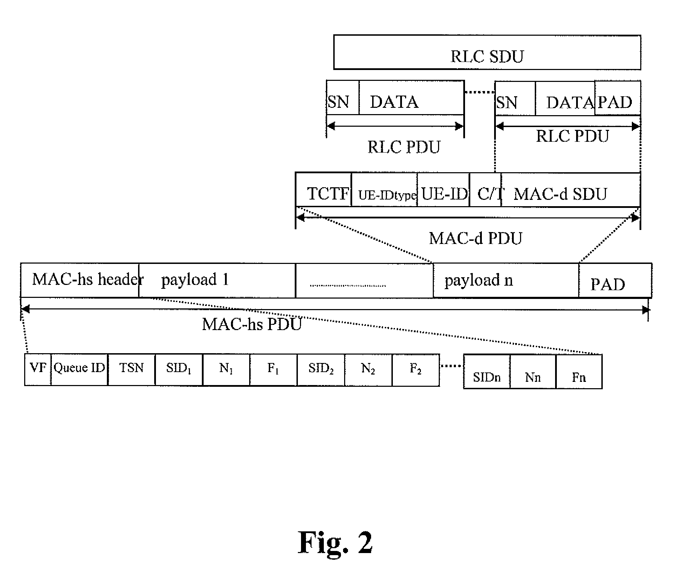

In a HSDPA/HSUPA system, after MAC data headers are added to the RLC PDUs by the MAC-d entity and MAC-d PDU are formed, they are concatenated by the MAC-hs/MAC-e entity, and a data header is added to form a physical frame. The size of the physical frame is determined by the transmission format. If the size of the data block obtained after the concatenation by the MAC-d PDU is smaller than the size of the physical frame, padding bits may be added in order to form the physical frame. The data flow and format are shown in figure 2, the parameters therein are explained in table 1 below.

**Table 1**

| | |
|---|---|
| VF | Version number of the protocol |
| Queue ID | Queue identification |
| TSN | Transmission Sequence Number |
| SID | length of MAC-d PDU |
| N | Number of MAC-d PDU with the length of SID |
| F | Flag indicating whether the following is data or SID |
| PAD | Padding bits |

Along with the evolution of WCDMA standards, the protocol framework of WCDMA systems will be optimized and simplified in the Long Term Evolution. It is proposed in the field that the twice-segmentation/concatenation in the existing protocol should be simplified. In other words, it is proposed that the size of RLC PDU is not defined; the RLC PDU is formed instead from the payload of upper layer data directly. For TCP/IP services, the size of RLC PDU is equal to the size of IP packets. The function of segmentation is added in the MAC layer, in order to segment/concatenate the RLC PDU to form physical frames. In other words, segmentation/concatenation is performed only once in the MAC layer in the whole system, in order to simplify the system structure, and for the system to adapt quickly to the changes in the physical layer, and reduce the numbers of bits padded in the data transmitted in the air interface. In such a protocol structure proposed, what are retransmitted in the physical layer are the physical layer frames formed after the MAC layer segmentation/concatenation, and what is retransmitted in the RLC layer is the whole RLC PDU. Alternatively, the data payload from upper layers are directly segmented into RLC PDU according to the transmission format, and concatenated in the MAC layer. When the RLC layer and the MAC layer are in the same entity, the two methods are equivalent.

Although the method of one-segmentation may reduce the number of padding bits transmitted, a problem exists. An RLC PDU is segmented into a plurality of physical frames for the previous transmission in the physical layer. When only the data included in one physical frame are in error after the physical layer transmission, the whole RLC PDU has to be retransmitted in the RLC layer, because the transmitter is not able to identify the physical frame with the data in error. Thus, when the RLC PDU is large in size, the transmission efficiency of the air interface will be reduced, and the system resources will be wasted.

### SUMMARY

The invention provides a method, a device, and a system for data retransmission, in order to solve the problem in the related art that the transmitting side has to retransmit the whole data unit before segmentation when the transmission in the physical layer fails, thus lowering the transmission efficiency and wasting the system resources.

A method for data retransmission comprises the following steps:

recording a segmentation identification of a segment block in the segment block when a transmitting side performs a segmentation processing for a data unit according to a physical layer transmission format, wherein the segmentation identification of the segment block effectively identifies the segment block among all segment blocks stored in the transmitting side;

retrieving from the stored segment blocks and retransmitting a corresponding segment block according to the segmentation identification of the segment block by the transmitting side if the transmitting side determines that the segment block is not received correctly by a receiving side.

A data transmission device comprises:

a first module for encapsulating a Service Data Unit to be transmitted into a Protocol Data Unit, or recovering the Service Data Unit from the Protocol Data Unit;

a second module for performing a segmentation processing for the Protocol Data Unit encapsulated by the first module according to a physical layer transmission format, and identifying each segment block, forming and transmitting a Hybrid Automatic Repeat Protocol Data Unit; or recovering the Protocol Data Unit from the Hybrid Automatic Repeat Protocol Data Unit according to the segmentation identification of the segment block and transmitting the recovered Protocol Data Unit to the first module;

a transceiver module for processing the Hybrid Automatic Repeat Protocol Data Unit transferred by the second module to form a physical frame, and transmitting the physical frame to a wireless link; or receiving the physical frame from the wireless link and recovering the Hybrid Automatic Repeat Protocol Data Unit from the physical frame and transmitting the Hybrid Automatic Repeat Protocol Data Unit to the second module;

the second module retrieves a corresponding segment block from the stored segment blocks according to the segmentation identification of the segment block when it is determined that the segment block needs to be retransmitted.

A data transmission device comprises:

a module for recording a segmentation identification of a segment block in the segment block when a segmentation processing is performed for a data unit according to a physical layer transmission format, wherein the segmentation identification of the segment block effectively identifies the segment block among all stored segment blocks;

a module for retrieving from the stored segment blocks and retransmitting a corresponding segment block according to the segmentation identification of the segment block when it is determined that the segment block is not received correctly by a receiving side.

A data transmission system comprises:

a data transmission device for transmitting a physical frame, wherein a segmentation identification of a segment block is recorded in a segmentation property field added into the segment block when a segmentation processing is performed for a data unit according to a physical layer transmission format, the segmentation identification of the segment block effectively identifies the segment block among all the segment blocks stored in the data transmission device;

a data receiving device for receiving the physical frame, and adding the segmentation identification of each of the segment blocks of the physical frame in a reception acknowledgement message to be returned to the data transmission device;

the data transmission device retrieves a corresponding segment block from the stored segment blocks according to the segmentation identification of the segment block and retransmits the segment block, when the data transmission device determines that the segment block is not received correctly by the data receiving device.

In one embodiment of the invention, by identifying the segmented/concatenated data, it is only necessary to retransmit the segment blocks received with errors when part of the segment blocks are in error in the transmission, which avoids the necessity to retransmit a lot of data blocks when only a part of the data are in error in the transmission, and reduces the waste of system resources, overcoming the problem of prolonging the retransmission time caused by the retransmission of large data blocks segmented into a plurality of physical frames.

### BRIEF DESCRIPTION OF THE DRAWING(S)

Fig. 1 is a diagram illustrating the framework of the wireless interface protocol in the related art;

Fig. 2 is a diagram illustrating the data flow and modes for the air interface protocol in the related art;

Fig. 3 is a flow chart illustrating the data retransmission in an embodiment of the invention;

Fig. 4 is a diagram illustrating the data flow for the air interface protocol in an embodiment of the invention;

Fig. 5 and Fig. 6 are diagrams illustrating the data flow and modes for the air interface protocol in an embodiment of the invention; and

Fig. 7 is a structure diagram of the data transmission system and data transmission device in an embodiment of the invention.

### DETAILED DESCRIPTION

The embodiments will be described with the data transmission in a WCDMA system as an example.

After a data unit is segmented into a plurality of segment blocks according to a physical layer transmission format, in order to avoid retransmission of the whole data unit when a segment block is in error in the physical layer transmission, a segmentation identification is recorded in a segmentation property field appended for the segment block after the segmentation in an embodiment of the invention. The segmentation identification may effectively identify a segment block among all the segment blocks stored in the transmitter, i.e., the segment block is identified uniquely. When the physical frame concatenated after the segmentation of the data unit is in error in the physical layer transmission, it is only necessary to retrieve the corresponding segment blocks in error from the stored segment blocks according to their segmentation identifications.

The data unit may be a Layer 2 Protocol Data Unit (PDU), or a Layer 2 Service Data Unit (SDU). The following detailed description will take a Layer 2 Protocol Data Unit as an example.

The segmented PDU may be a PDU after the segmentation in the Radio Link Control (RLC) layer according to a twice-segmentation/concatenation method, or a PDU after the encapsulation in the RLC layer according to a one-segmentation/concatenation method. The following description will be made with the one-segmentation method as an example.

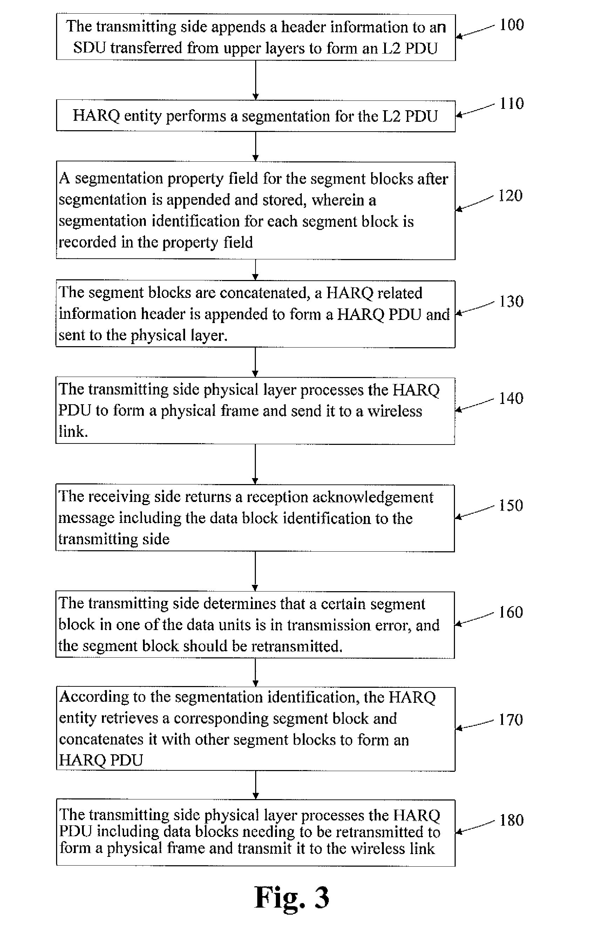

As illustrated in Fig. 3, the process flow beginning from receiving upper layer data to data retransmitting at the transmitting side is as follows (taking the High-Speed Downlink Shared Channel data flow, HS-DSCH, as an example):

Step 100: header information is appended by the transmitting side to the SDU transferred from upper layers, to form an L2 PDU, and the header information includes at least a Sequence Number.

Step 110: the L2 PDU is segmented by the Hybrid Automatic Repeat Request (HARQ) entity of the transmitting side according to the size of the L2 PDU and the available physical transmission format.

The segmentation includes at least one segmentation, includes also zero segmentation (i.e. no segmentation).

Step 120: a segmentation property field (i.e. the segment block header information) is appended and stored after segmentation for each segment block, wherein the segmentation identification for each segment block is recorded in the property field, and the segmentation identification may identify uniquely the segment block among all the segment blocks stored.

Step 130: it is determined whether the segment blocks are necessary to be concatenated according to the transmission format selected by the MAC layer, a HARQ related information header is appended to form an HARQ PDU; and the HARQ PDU is sent to the physical layer.

Redundant bits may be added in the process of concatenation as required.

Step 140: physical frames are formed after a base band processing made to the HARQ PDU by the transmitting side physical layer, and are sent to the wireless link.

Step 150: according to the polling request from the transmitting side, a reception acknowledgement message including the segmentation identification is returned to the transmitting side by the receiving side, wherein the segmentation identification may indicate a correct reception or a wrong reception.

Step 160: after the segmentation identifications are ordered, the transmitting side determines that a certain segment block (or a plurality of segment blocks, such as two segment blocks) in one of the data units is in error, and the segment block should be retransmitted.

Step 170: according to the segmentation identification, the HARQ entity retrieves the segment block from the stored segment blocks and concatenates it with other segment blocks to form an HARQ PDU, and transfers it to the physical layer.

The segment block that should be retransmitted may be re-segmented, and concatenated with other segment blocks after the segmentation to form a new HARQ PDU.

Step 180: after the base band processing performed to the HARQ PDU formed in step 170, the transmitting side forms a physical frame in the physical layer, and transmits the physical frame to the wireless link.

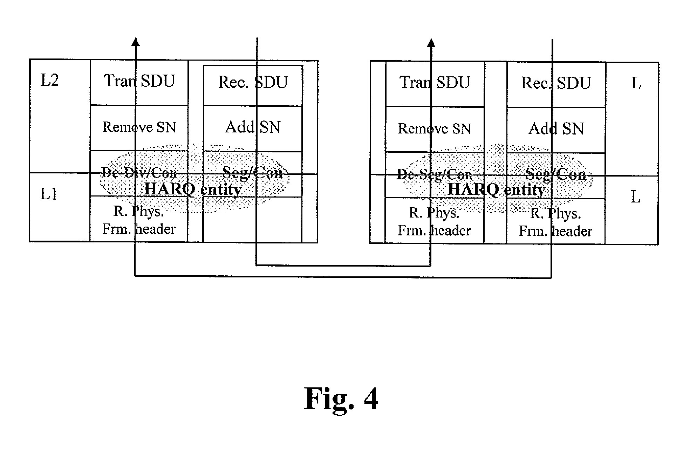

At the receiving side, the correctly received segment blocks are ordered according to their segmentation identifications by the HARQ entity, L2 PDUs are recovered and transferred to the L2 layer. The process is the inversion of the process made at the transmitting side, the data flow at the transmitting side and the receiving side is shown in Fig. 4.

The following description will be made for the PDU and the data format after segmentation/concatenation.

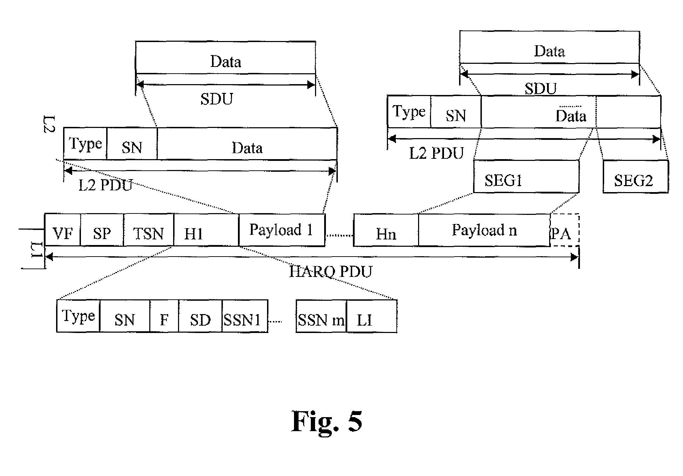

As shown in Fig. 5, L2 PDU data format is constructed with the header information and the SDU from upper layers, in which the header information includes:

Type: indicating whether the content of the PDU is control information or data information, whether it is retransmitted data, 2 bits;

SN: for identifying an L2 PDU, 12 bits.

In the HARQ PDU:

VF, TSN are respectively the protocol version number and the HARQ Transmission Sequence Number, in compliance with current protocols, 1 bit;

SP (Schedule Priority): number of Scheduling Priority, 3 bits;

PAD (Padding): Padding bits, redundant bits added when the HARQ PDU is formed and the size of data to be transmitted is smaller than the size the transmission format permits;

Hn: Header information of the nth L2 PDU segment block included in the HARQ PDU, the maximum length of Hn is 54 bits, the minimum length is 15 bits, which includes the following sub-items:

LI (Length Indicator): Length Indicator for the present L2 PDU segment block, 12 bits;

F: indicating whether the PDU is the last segment block of the present segmentation depth, 1 bit;

SD (Segmentation Depth): the depth of the PDU segment block, i.e., the times of segmentation experienced. For example, the SD of the L2 PDU transmitted for the first time is 0, which means no segmentation is performed, and the L2 PDU includes the whole PDU; for the second transmission, it is necessary to be segmented, then SD is 1, and so on; 2~3 bits; when SD=0, F is 1;

SSNm (Segmentation Sequence Number): indicating the number of the segment block in the segment blocks of the mth segmentation, 2~3 bits.

In this HARQ PUD structure, SD determines the number of SSN. When SD = 0, no segmentation is performed, the SSN field does not exist; when SD = 1, segmentation is performed once, the SSN field has only SSN1 (3 bits), and so on. The length of the SSN field is determined by the value af SD, therefore may be configured flexibly.

In this format, the segmentation identification is composed of SN, SD, and SSN.

The configuration of SN, SD, and SSN, and the process of data retransmission, are described with the format illustrated in Fig. 5 by means of specific examples:

The L2 PDU of the first transmission with SN = M is segmented into three blocks when the HARQ PDU is formed and the three blocks are transmitted in sequence. For the three L2 PDU segment blocks, SN = M, SD = 001, and their SSN are respectively 000, 001, 010, and its LI entry represents its real length. At the receiving side, the recovered L2 PDU may be ordered according to their SN, SD, SSN, in order to recover the SDU.

For services in the Acknowledgement Modes, the L2 PDU segment blocks segmented during the formation of the HARQ PDU is not deleted by the transmitting side if no acknowledgement indication is received. SN, SD, SSN, LI are included in the feedback information from the receiving side; the transmitting side may select the retransmitted L2 PDU segment blocks according to the SN, SD, SSN, LI information included in the feedback information. If the L2 PDU segment blocks which should be retransmitted need to be re-segmented on forming the HARQ PDU, it is necessary to configure new SD, SSN, LI header information for the re-segmented segment blocks, the transmitting side also records the new SD, SSN, LI information.

In continuation with the above example, it is assumed that the first and the third parts of the three parts of the L2 PDU of the first transmission are received correctly, and retransmission is needed for the second part. In the process of the second transmission for the second part, the segment block with the original header information of SN = M, SD = 001, SSN = 001 needs to be re-segmented into two blocks and transmitted in two HARQ PDU, then for the two newly segmented L2 PDU segment blocks, SN = M, SD = 010, and their SSN are respectively 001 000 and 001 001. It is seen from the header information, the data block belongs to the L2 PDU with SN = M, and it has been segmented twice, and segmented into totally two blocks respectively. Assumed that the two parts of the newly segmented data are received correctly, the number of data blocks received correctly at the receiving side is 4, the header information is listed in table 2.

**Table 2**

| Number of data blocks | SN | F | SD | SSN | |
|---|---|---|---|---|---|
| 1 | M | 0 | 001 | SSN1=000 | |
| 2 | M | 1 | 001 | SSN1=010 | |
| 3 | M | 0 | 010 | SSN1=001 | SSN2=000 |
| 4 | M | 1 | 010 | SSN1=001 | SSN2=001 |

The received data may be ordered by the receiving side according to the header information, and the whole SDU may be recovered.

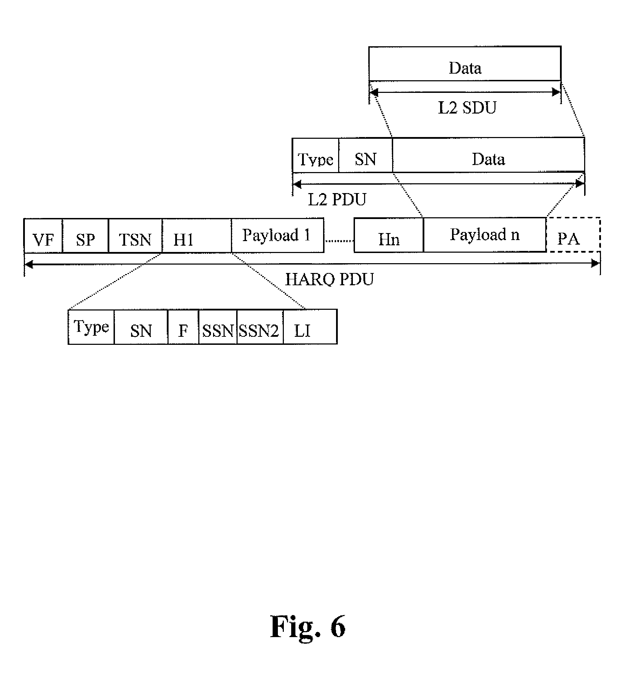

The header information Hn of the L2 PDU segment block n in the HARQ PDU may be defined using the format shown in Fig. 6, wherein:

SN, Type: defined the same as in Fig. 5;

SSN1: the number in the previous segmentation of the segment block which the present segment block is in, 4 bits;

SSN2: the number of the present segment block in the present segmentation, 3 bits;

F: indicating whether the PDU is the last segment block in the present segmentation, 1 bit.

The present method for recording the header information needs totally 21 bits.

In this structure, the segmentation identification of the segment block is composed of SN, SSN1, and SSN2.

Using that format, the numbers, i.e. the SSN1, SSN2 fields, are updated by the receiving side every time it receives an L2 PDU segment block, wherein SSN1 is configured as the number after all the received data block have been re-ordered, SSN2 is set as 000. For the data which needs to be retransmitted, the SSN1, SSN2 contents transmitted last time, and the re-ordered received SSN1, are fed back. Taking the L2 PDU with SN = M as an example:

(1) The first transmission

It is assumed that the L2 PDU is segmented into three blocks in the first transmission, the header information and the data of the three segment blocks are stored in the transmitting side together, as shown in table 3:

**Table 3**

| Number of data blocks | F | SN | SSN | |
|---|---|---|---|---|
| 1 | 0 | M | SSN1=0000 | SSN2=000 |
| 2 | 0 | M | SSN1=0000 | SSN2=001 |
| 3 | 1 | M | SSN1=0000 | SSN2=010 |

The header information of the three blocks are all updated at the receiving side, wherein the SSN1 content is the content of the SSN2 filed transmitted last time, as shown in table 4:

**Table 4**

| Number of data blocks | F | SN | SSN | |
|---|---|---|---|---|
| 1 | 0 | M | SSN1=0000 | SSN2=000 |
| 2 | 0 | M | SSN1=0001 | SSN2=000 |
| 3 | 1 | M | SSN1=0010 | SSN2=000 |

The received SSN1, SSN2 and the SSN1 updated at the receiving side are fed-back.

(2) The second transmission

It is assumed that the second block is correctly received in the first transmission, the first and the third blocks are received in error, and need to be retransmitted. It is assumed also that the first block needs to be re-segmented into three blocks in the retransmission, and the third block needs to be segmented into two blocks in the retransmission, i.e., they are segmented into totally five blocks. The transmitting side renumbers the new segment blocks, and the SSN1 field content is updated with SSN1 updated at the receiving side; the SSN2 field is the number of the present segment block in the present segmentation, and their numbers are shown in table 5:

**Table 5**

| Number of data blocks | F | SN | SSN | |
|---|---|---|---|---|
| 1 | 0 | M | SSN1=0000 | SSN2=000 |
| 2 | 0 | M | SSN1=0000 | SSN2=001 |
| 3 | 1 | M | SSN1=0000 | SSN2=010 |
| 4 | 0 | M | SSN1=0010 | SSN2=000 |
| 5 | 1 | M | SSN1=0010 | SSN2=001 |

The updated header information is stored at the transmitting side together with the segment blocks.

At the receiving side, after the five data blocks are received, there are six data blocks with sequence number of M, their headers are shown as table 6:

**Table 6**

| Number of data blocks | F | SN | SSN | |
|---|---|---|---|---|
| 1 | 0 | M | SSN1=0000 | SSN2=000 |
| 2 | 0 | M | SSN1=0000 | SSN2=001 |
| 3 | 1 | M | SSN1=0000 | SSN2=010 |
| 6 | 0 | M | SSN1=0001 | SSN2=000 |
| 4 | 0 | M | SSN1=0010 | SSN2=000 |
| 5 | 1 | M | SSN1=0010 | SSN2=001 |

The received data are ordered by the receiving side according to their SSN1. It is seen that the first through the third blocks are located in the front, followed by the sixth block, and the fourth and the fifth blocks are the last.

After the second transmission and the six blocks of data are received, the header information of the six data blocks are updated at the receiving side as shown in table 7:

**Table 7**

| Number of data blocks | SN | SSN | |
|---|---|---|---|
| 1 | M | SSN1=0000 | SSN2=000 |
| 2 | M | SSN1=0001 | SSN2=000 |
| 3 | M | SSN1=0010 | SSN2=000 |
| 6 | M | SSN1=0011 | SSN2=000 |
| 4 | M | SSN1=0100 | SSN2=000 |
| 5 | M | SSN1=0101 | SSN2=000 |

If the fourth block is in transmission error again, the numbers SSN1 = 0010, SSN2 = 000 at transmission are fed back to the transmitting side, the corresponding block may be found at the transmitting side, and the information fed-back to the transmitting side includes the updated change SSN1 = 0100, as the content of SSN1 field for retransmission.

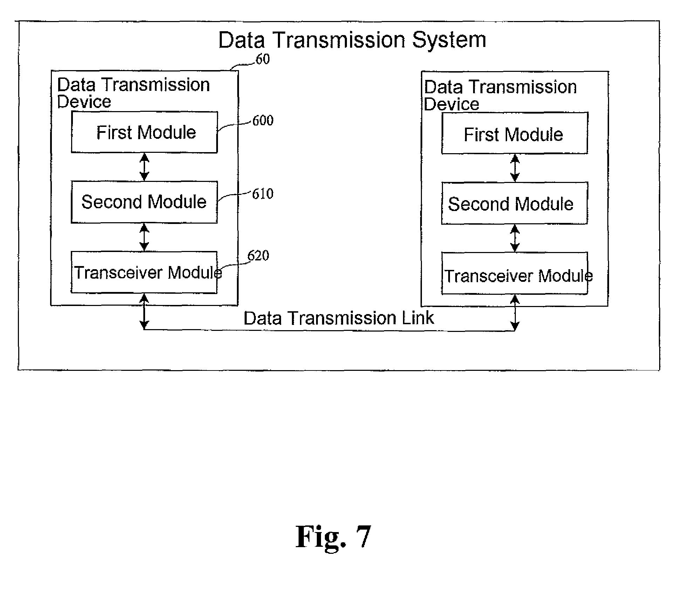

Correspondingly, a data transmission system for implementing the above described method in an embodiment of the invention is shown in Fig. 7, wherein the data transmission device 60 includes a first module 600, a second module 610, and a transceiver module 620 (the existing function modules above the first module 600 are not shown), wherein: the first module 600 encapsulates the SDU that needs to be transmitted into a PDU, and recovers the SDU from the PDU. The second module 610 logically connected with the first module performs a segmentation processing to the PDU of the encapsulated first unit 600 according to a physical transmission format, identifies each segment block, and concatenates the segment blocks to form a HARQ PDU; and recovers the PDU from the HARQ PDU and transmits it to the first module 600. The transceiver module 620 logically connected with the second module performs a base band processing to the HARQ PDU concatenated by the second module 610 into physical frames, and transmits it to the wireless link. And after the physical frames are received from the wireless link and processed in base band, they are transferred to the second module 610. On determining that the receiving side does not receive the segment blocks correctly, the second module 610 retrieves the corresponding segment blocks from the stored segment blocks according to the segmentation identifications, and concatenates them to form a HARQ PDU, and the segment block is retransmitted by the transceiver module 620. When the second module 610 retransmits the segment block, the segment block initially transmitted may be re-segmented as required, and the segmentation identification is recorded in the segment blocks obtained from the re-segmentation. The first module 600 is a wireless link layer module. The second module 610 is an HARQ module. The transceiver module 620 is a physical layer module, for the processing please see the above description, which will not be repeated here.

The L2 PDU is formed by adding header information to the SDU transferred from upper layers, therefore, for the situation in which the RLC SDU are segmented into a plurality of RLC PDU with different sizes according to the size of the transmission blocks (i.e., the physical layer transmission format) for transmission, it will be all right if the segmented RLC PDU is added with segmentation identifications, the processing method is the same as that described above.

According to the previous description, it is easy for the skilled in the art to obtain a device for transmitting data of the present embodiment, the device includes a module for recording a segmentation identification into a segment block when a data unit is segmented according to a physical layer transmission format; and a module for retrieving and retransmitting a corresponding segment block from the stored segment blocks according to the segmentation identification when it is determined that the receiving side does not receive the segment block correctly. Furthermore, it includes a module for re-segmenting the segment block of the initial transmission as required when retransmitting, and recording the segmentation identification into the re-segmented segment block.

According to the embodiments of the invention, only the retransmission of the segment blocks in error is necessary when a part of the segment blocks are in error, which avoids the retransmission of a large data block only because part of the transmitted data are in error, reducing the waste of the system resources, solving the problem of too long time of retransmission caused by the transmission of a plurality of physical frames when a large data block is retransmitted, Correspondingly, according to the segmentation depth flag, the scheduler at the transmitting side may recognize the data to be retransmitted and the emergency of retransmission, so as to give priority to the data to be retransmitted.

The method described above is not limited to WCDMA systems, it similarly may be used in the evolved UTRA system, the data retransmission processing in the system is the same as described above, and will not be repeated.

It is obvious that the skilled in the art may modify and change the invention without deviating from the sprite and scope of the invention. Thus, the modification and change within the scope of the claims are also included by the invention.

## Claims

1. A method for data retransmission, **characterized in that** it comprises the following steps:
recording, by a transmitting side, a segmentation identification for each segment block of a data unit when the transmitting side performs a segmentation processing for the data unit according to a physical layer transmission format, wherein the segmentation identification identifies the segment block among all segment blocks stored in the transmitting side;
retrieving from the stored segment blocks and retransmitting a corresponding segment block according to the segmentation identification of the segment block by the transmitting side if the transmitting side determines that the segment block is not received correctly by a receiving side.

2. The method according to claim 1, **characterized in that** the segmentation identification of the segment block of each of the segment blocks in a physical frame is added into a reception acknowledgement message to be returned to the transmitting side, after the receiving side receives the physical frame.

3. The method according to claim 1, **characterized in that** the transmitting side performs a segmentation processing for the data unit to be transmitted according only to the physical layer transmission format.

4. The method according to claim 1, **characterized in that** a further segmentation processing is performed on the segment block according to the physical layer transmission format before the segment block is retransmitted, and segmentation identifications of segment blocks obtained from the further segmentation are recorded in a segmentation property field added into the segment block.

5. The method according to any one of the claims 1-4, **characterized in that** the segmentation identification of a segment block is recorded in a segmentation property field added into the segment block, and the segmentation property field comprises a piece of header information of the segmented data unit.

6. The method according to claim 5, **characterized in that** the header information of the segmented data unit comprises a sequence number and a content type, the content type indicating whether the content of the data unit is a piece of data information or control information.

7. The method according to claim 6, **characterized in that** the segmentation property field further comprises an indication of the length of the segment block, a segmentation identification for the last segment block, a segmentation depth of the segment block, and a number of the segment block in the segmentation.

8. The method according to claim 7, **characterized in that** the segmentation identification of the segment block comprises the sequence number of the data unit, the segmentation depth of the segment block, and the number of the segment block in the segmentation.

9. The method according to claim 8, **characterized in that** the receiving side orders the received segment blocks according to the sequence numbers of the segment blocks, the segmentation depths of the segment blocks, and the numbers of the segment blocks, and recovers the data unit segmented by the transmitting side.

10. The method according to claim 8, **characterized in that** a field length of a field for recording the number of the segment block is determined by the segmentation depth of the segment block, the number of the segment block in one segmentation is recorded in each field length.

11. The method according to claim 7, **characterized in that** a frame header of the physical frame concatenated by the transmitting side comprises a version number of the protocol, a priority for scheduling, and a sequence number for transmission.

12. The method according to claim 6, **characterized in that** the segmentation property field further comprises an indication for the length of the segment block, the last segmentation identification, and the number of the segment block; the number of the segment block is represented by two fields, and the first field represents the number of the segment block in the previous segmentation before the present segmentation, and the second field represents the number of the segment block in the present segmentation.

13. The method according to claim 12, **characterized in that** the segmentation identification of the segment block comprises the sequence number of the data unit and the number of the segment block; the receiving side orders all the segment blocks of the received data unit according to the sequence numbers of the segment blocks and the numbers of the segment blocks, reassigns a number for the present segmentation, updates the number of the segment block, and recovers the data unit segmented by the transmitting side,

14. The method according to claim 12, **characterized in that** the frame header of the physical frame concatenated by the transmitting side comprises a version number of the protocol, a priority for scheduling, and a sequence number for transmission.

15. The method according to claim 1, **characterized in that** the data unit is a Layer 2 Protocol Data Unit, or a Layer 2 Service Data Unit.

16. A data transmission device, **characterized in that** it comprises:
a module for recording a segmentation identification of a segment block in the segment block when a segmentation processing is performed for a data unit according to a physical layer transmission format, wherein the segmentation identification of the segment block effectively identifies the segment block among all stored segment blocks;
a module for retrieving from the stored segment blocks and retransmitting a corresponding segment block according to the segmentation identification of the segment block when it is determined that the segment block is not received correctly by a receiving side.

17. The data transmission device according to claim 16, **characterized in that** it further comprises:
a module for re-segmenting the segment block initially transmitted as required when the segment block is retransmitted, and recording to the segmentation identification of the segment block in the re-segmented segment block.

18. A data transmission device, **characterized in that** it comprises:
a first module for encapsulating a Service Data Unit to be transmitted as a Protocol Data Unit, or recovering the Service Data Unit from the Protocol Data Unit;
a second module for performing a segmentation processing for the Protocol Data Unit encapsulated by the first module according to a physical layer transmission format, and identifying each segment block, forming and transmitting a Hybrid Automatic Repeat Protocol Data Unit; or recovering the Protocol Data Unit from the Hybrid Automatic Repeat Protocol Data Unit according to the segmentation identification of the segment block and transmitting the recovered Protocol Data Unit to the first module;
a transceiver module for processing the Hybrid Automatic Repeat Protocol Data Unit transferred by the second module to form a physical frame, and transmitting the physical frame to a wireless link; or receiving the physical frame from the wireless link and recovering the Hybrid Automatic Repeat Protocol Data Unit from the physical frame and transmitting the Hybrid Automatic Repeat Protocol Data Unit to the second module;
wherein the second module retrieves a corresponding segment block from the stored segment blocks according to the segmentation identification of the segment block when it is determined by the second module that the segment block needs to be retransmitted.

19. The data transmission device according to claim 18, **characterized in that** the second module re-segments the segment block initially transmitted when the segment block is retransmitted by the second module, and recodes the segmentation identification in the re-segmented segment block.

20. A data transmission system, **characterized in that** it comprises:
a data transmission device for transmitting a physical frame, wherein a segmentation identification of a segment block is recorded in a segmentation property field added into the segment block when a segmentation processing is performed for a data unit according to a physical layer transmission format, the segmentation identification of the segment block effectively identifies the segment block among all the segment blocks stored in the data transmission device;
a data receiving device for receiving the physical frame, and adding the segmentation identification of each of the segment blocks of the physical frame in a reception acknowledgement message to be returned to the data transmission device;
wherein the data transmission device retrieves a corresponding segment block from the stored segment blocks according to the segmentation identification of the segment block and retransmits the corresponding segment block, when the data transmission device determines that the segment block is not received correctly by the data receiving device.

21. The data transmission system according to claim 20, **characterized in that** the data transmission device re-segments the segment block initially transmitted when the data transmission device retransmits the segment block, and records the segmentation identification in the re-segmented segment block.
